# DEMANDE DE BREVET EUROPEEN

(11) **EP 4 610 012 A1**
(43) Date de publication de la demande: **03.09.2025**
(21) Numéro de dépôt: 25160472.4
(22) Date de dépôt: 27.02.2025
(51) Int. Cl.: B29B 11/16, B29C 70/44, B29D 99/00

(54) **DISPOSITIF POUR LE PRÉFORMAGE D'UN PROFILÉ COMPOSITE CREUX ET PROCÉDÉ DE PRÉFORMAGE D'UN PROFILÉ COMPOSITE CREUX, NOTAMMENT DE TYPE RAIDISSEUR COMPOSITE**

(30) Priorité: 28.02.2024 FR 2401939
(71) Demandeur: Loiretech Ingenierie, 44340 Bouguenais (FR)
(72) Inventeur: MORET, Marc, 44240 La chapelle sur Erdre (FR)
(74) Mandataire: Ipside

(57) **Abrégé**

L'invention concerne un dispositif (100) pour le préformage d'un profilé composite creux comprenant un profil mâle et un profil femelle, comprenant :
un poinçon (110) mâle, une cloche (120) en regard du poinçon, et une vessie (130) déformable disposée dans la cloche et pouvant être mise sous pression ;
et qui est configuré pour recevoir une bande de matériau composite semi-fini (200) entre le poinçon et la vessie ;
la vessie comprenant une paroi (131) avec une portion de paroi assouplie, et une portion de paroi rigidifiée qui est préformée de sorte à présenter un profil prédéfini dont la forme au repos correspond au profil mâle du profilé, et qui configurée pour entrer en contact avec la bande de matériau ;
et qui est configuré pour préformer le profilé par déformation de la vessie sous pression, de sorte à appliquer puis compacter la bande de matériau contre le poinçon.

## Description

### DOMAINE TECHNIQUE DE L'INVENTION

Le domaine de l'invention est celui des structures composites et de leurs procédés de fabrication.

Plus précisément, l'invention concerne un dispositif, ou outil, pour le préformage d'un profilé composite creux, notamment de type raidisseur composite.

L'invention a également pour objet un procédé de préformage d'un profilé composite creux, mis en œuvre par un tel dispositif.

L'invention a aussi pour objet une préforme de profilé composite creux, notamment de type raidisseur composite, obtenue au moyen d'un tel procédé de préformage.

L'invention a également pour objet un procédé de fabrication d'une structure composite, notamment de type panneau composite, comprenant le préformage d'un profilé composite creux, notamment de type raidisseur composite, au moyen d'un procédé de préformage selon l'invention.

Enfin, l'invention a aussi pour objet une structure composite, notamment de type panneau composite, obtenu au moyen d'un tel procédé.

L'invention trouve notamment des applications dans la fabrication de préformes de raidisseurs pour le renforcement de peaux composites, pour former des pièces composites telles que des panneaux de fuselage d'aéronef.

L'invention trouve des applications dans les industries technologiques de l'aéronautique et du spatial, mais peut également trouver des applications dans le domaine des véhicules terrestres ou marins, ou encore dans les industries du bâtiment ou de l'énergie.

### ÉTAT DE LA TECHNIQUE

Les structures d'aéronefs, notamment les fuselages d'aéronefs, sont généralement constituées de peaux composites renforcées par des éléments de renforcement.

Par exemple, de tels éléments de renforcement peuvent être des raidisseurs, parfois également appelés longerons, lisses, ou « stringers » en terminologie anglaise.

De tels raidisseurs peuvent en particulier eux-mêmes être en matériau composite, par exemple d'un même matériau que la peau composite qu'ils sont destinés à renforcer.

Les raidisseurs connus se présentent en général sous la forme de profilés composite creux, c'est-à-dire sous la forme d'un élément longiligne présentant une section avec un profil concave, dit femelle, et un profil convexe, dit mâle, opposé au profil femelle. En particulier, le profilé composite creux est ouvert, c'est-à-dire qu'il ne définit pas une section fermée mais plutôt ouverte.

Par la suite, il est fait référence dans la présentation de l'état de la technique et dans l'exposé de l'invention ainsi que dans la description détaillée au terme « raidisseur », l'invention qui sera exposée ci-après pouvant toutefois être généralisée à tout profilé composite creux générique.

Par exemple, la section d'un raidisseur peut présenter un profil dit oméga (Ω), mais peut également présenter une forme en U, en V, en D, en L ou en Delta, par exemple.

La figure 1 représente schématiquement un panneau composite 1 générique, comprenant une peau composite 2 et une pluralité de raidisseurs 3 au profil oméga, ici au nombre de trois, qui sont moulés sur la peau composite 2.

La figure 2 représente schématiquement un raidisseur 3 présentant un profil oméga, pris isolément.

Le raidisseur 3 présente un profil mâle 4, aussi appelé profil externe, et un profil femelle 5, aussi appelé profil interne, opposée au profil mâle 4.

Le profil mâle 4 forme un profil convexe tandis que le profil femelle 5 forme un profil concave du raidisseur 3.

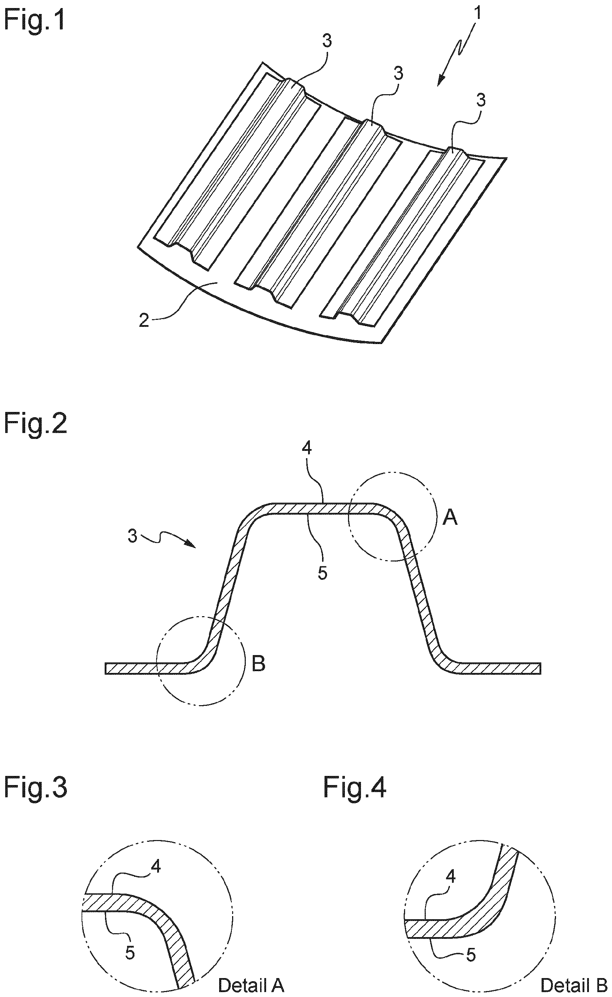

Le profil femelle 5 est généralement orienté vers la peau composite 2, comme cela est visible sur la figure 1.

Les raidisseurs composites sont en général obtenus à partir d'une bande de préimprégné, par exemple comprenant un renfort en fibres de carbone et une matrice en résine, qui est mise à la forme du profil souhaité puis pré-cuite afin de préformer le raidisseur composite. Le résultat obtenu est une préforme de raidisseur composite, pouvant par exemple être ultérieurement co-cuit avec une pièce composite telle qu'une peau composite, pour obtenir une structure composite. La pré-cuisson permet d'assurer que le préimprégné conserve la préforme qui lui a été conférée tout en autorisant une cuisson ultérieure.

Selon une alternative, les raidisseurs composites peuvent également être obtenu à partir d'une bande de renfort « sèche » par exemple comportant une poudre thermoplastique qui est mise en forme à chaud, puis par exemple infusée de résine de préférence sous vide lors de l'opération de fabrication du panneau raidi.

Les préimprégnés, les renforts secs notamment « poudrés », et tout autre composé connu pouvant être utilisé pour la mise en forme, sont désignés dans la suite de la description de manière générique par « matériau composite semi-fini ».

La mise en forme du matériau composite semi-fini peut se faire de différentes manières.

Par exemple, une première technique connue comprend le maintien du matériau composite semi-fini au moyen de serre-flancs, puis la mise à la forme du matériau composite semi-fini par avancement d'un poinçon mâle entre les serres-flancs.

Une deuxième technique connue comprend le pressage du matériau composite semi-fini entre un poinçon mâle et une matrice femelle.

Une troisième technique connue comprend le recouvrement d'un poinçon mâle par le matériau composite semi-fini, suivi du recouvrement de l'ensemble par une bâche étanche et de sa mise sous vide afin de plaquer le matériau composite semi-fini contre le poinçon.

La première et la deuxième technique précitée présentent l'inconvénient de l'apparition de fortes tensions au niveau des angles dits mâles du matériau composite semi-fini lors de la mise en forme, se traduisant en une épaisseur de matériau insuffisante au niveau de ces angles.

La figure 3 illustre schématiquement un angle dit mâle (c'est-à-dire convexe sur le profil mâle 4 lui-même convexe) d'un raidisseur obtenu selon cette première ou deuxième technique de préformage, correspondant au détail A de la figure 2.

Tel que cela est représenté, l'angle mâle présente une épaisseur réduite au niveau du rayon de courbure.

La troisième technique précitée présente l'inconvénient d'une tension insuffisante au niveau des angles dits femelles du matériau composite semi-fini lors de la mise en forme, se traduisant en une épaisseur de matériau excessive au niveau de ces angles.

La figure 4 illustre schématiquement un angle dit femelle (c'est-à-dire concave sur le profil mâle 4 qui est convexe) d'un raidisseur obtenu selon cette troisième technique de préformage, correspondant au détail B de la figure 2.

Tel que cela est représenté, l'angle femelle présente une épaisseur augmentée au niveau du rayon de courbure.

La sur-épaisseur ou la sous-épaisseur d'un raidisseur au niveau de ses angles peut entraîner une fragilité structurelle au niveau de ces zones, et il existe ainsi un risque important de défauts structurels dans le raidisseur obtenu.

Il existe ainsi un besoin pour obtenir des raidisseurs composites qui présentent une intégrité structurelle sur l'ensemble de leur profil.

### EXPOSÉ DE L'INVENTION

La présente invention vise à remédier à tout ou partie des inconvénients de l'état de la technique cités ci-dessus.

À cet effet, l'invention vise un dispositif pour le préformage d'un profilé composite creux comprenant un profil mâle et un profil femelle, comprenant : un poinçon mâle correspondant à la forme du profil femelle du profilé composite creux, une cloche configurée pour être disposée en regard du poinçon, et au moins une vessie déformable disposée à l'intérieur de la cloche et configurée pour être mise sous pression ;
le dispositif étant configuré pour recevoir une bande de matériau composite semi-fini entre le poinçon et l'au moins une vessie ;
l'au moins une vessie comprenant une paroi avec une portion de paroi assouplie et une portion de paroi rigidifiée, la portion de paroi rigidifiée étant préformée de sorte à présenter un profil prédéfini dont la forme au repos correspond au moins en partie au profil mâle du profilé composite creux, la portion de paroi rigidifiée étant configurée pour entrer au moins partiellement en contact avec la bande de matériau composite semi-fini ;
le dispositif étant configuré pour préformer le profilé composite creux par déformation de l'au moins une vessie sous l'effet de la pression, de sorte à appliquer puis compacter la bande de matériau composite semi-fini contre le poinçon.

En particulier, par profil prédéfini, on entend un profil de la portion de paroi rigidifiée qui possède une forme prédéterminée, conférée à la paroi rigidifiée lors de sa fabrication par exemple.

Par « au repos », on entend un état de la vessie lorsqu'elle n'est pas sollicitée mécaniquement, autrement qu'éventuellement par la pression atmosphérique et la force gravitationnelle, en particulier en opposition à un état de travail où la vessie est déformée sous l'effet d'une pression interne.

La portion de paroi rigidifiée est plus rigide, c'est-à-dire moins souple et moins aisément déformable, que la portion de paroi assouplie.

La préforme est imprimée initialement à la portion de paroi rigidifiée, qui permet en particulier d'appliquer le matériau composite semi-fini contre les angles dit femelles du poinçon, et ainsi d'éviter des contraintes dans les angles femelles du profile mâle du profilé et en particulier d'y éviter un excédent d'épaisseur de matière.

La déformation de la portion de paroi rigidifiée, qui est appliquée contre le matériau composite semi-fini, permet à celui-ci d'épouser les angles mâles du poinçon, et ainsi d'éviter des contraintes dans les angles mâles du profil mâle du profilé et en particulier d'y éviter un déficit d'épaisseur de matière.

Il convient de préciser que la portion de paroi rigidifiée conserve au moins en partie sa préforme initiale lorsque la vessie est mise sous pression, la portion de paroi rigidifiée étant cependant également en partie déformée lorsque la vessie est mise sous pression. Ainsi, la vessie possède une configuration dite au repos, c'est-à-dire lorsqu'elle n'est pas mise sous pression, dans laquelle la portion de paroi rigidifiée est dans sa géométrie initiale, avec un profil correspondant au moins en partie au profil mâle du profilé composite creux. La vessie possède en outre une configuration dite de travail, c'est-à-dire lorsqu'elle est mise sous pression, dans laquelle la portion de paroi rigidifiée conserve en partie sa géométrie initiale, mais est également en partie déformée, de sorte que le profil de la portion de paroi rigidifiée corresponde entièrement au profil mâle du profilé composite creux.

Autrement dit, la combinaison d'une préforme initiale de la vessie, au niveau de sa portion de paroi rigidifiée, et d'une capacité de déformation de celle-ci, lors de la mise sous pression de la vessie, permet de conformer le matériau composite semi-fini au poinçon sans introduire de contraintes mécaniques préjudiciables dans le profilé obtenu.

Des caractéristiques particulièrement avantageuses du dispositif selon l'invention sont présentées ci-dessous.
- Ladite portion de paroi rigidifiée peut être formée par une portion de paroi épaissie, et ladite portion de paroi assouplie peut être formée par une portion de paroi amincie.

En particulier, une telle vessie peut aisément être obtenue par extrusion de matière, par exemple élastomère.
- Au moins une partie de ladite portion de paroi assouplie peut présenter un profil configuré pour être replié en accordéon en l'absence de mise sous pression de l'au moins une vessie et pour être déplié lorsque l'au moins une vessie est mise sous pression.

Ceci participe à l'application sans contrainte mécanique du matériau composite semi-fini contre le poinçon.
- L'au moins une vessie peut être en matériau élastomère, préférentiellement renforcée au moins en partie avec une âme tissée.

Ceci permet de renforcer significativement la vessie notamment lorsque celle-ci est exposée à de nombreux cycles de gonflage/dégonflage et de garantir notamment durablement la conformité géométrique de la partie rigidifiée.
- La cloche peut comprendre deux cavités internes, et le dispositif peut comprendre deux vessies, chacune disposée dans une cavité interne distincte, de façon sensiblement symétrique.

Un tel agencement permet l'expansion simultanée de deux vessies symétriques, et ainsi une application du matériau composite semi-fini contre le poinçon avec une correspondance exacte des formes des portions de paroi rigidifiées et du poinçon.

Il convient de noter que les cavités sont ici ouvertes, c'est-à-dire qu'elles s'ouvrent en direction du poinçon et qu'elles sont accessibles.
- La cloche peut comprendre une nervure centrale séparant les deux cavités internes de la cloche, la nervure centrale étant configurée pour entrer en contact avec la bande de matériau composite semi-fini de sorte à mettre en contact le poinçon avec la bande de matériau composite semi-fini au niveau de ladite nervure centrale.

Autrement dit, la nervure centrale sépare l'espace intérieur de la cloche en deux cavités sensiblement symétriques, c'est-à-dire que la nervure centrale est située dans un plan de symétrie de la cloche.

Ainsi, la bande de matériau composite semi-fini peut être pris entre la nervure centrale et le poinçon lorsque le dispositif est fermé. Ceci permet notamment de maintenir la bande de matériau composite semi-fini latéralement en position, et ainsi d'assurer une déformation symétrique de la bande de matériau composite semi-fini par les deux vessies qui se gonflent.
- Le profilé composite creux à préformer peut présenter un profil dit oméga, et la forme au repos du profil prédéfini des portions de paroi rigidifiée de chacune des vessies peut être sensiblement en forme de L.
- Le dispositif peut comprendre un moyen de maintien temporaire de la bande de matériau composite semi-fini à l'intérieur de la cloche.

En particulier, la bande de matériau composite semi-fini est maintenue lorsque l'au moins une vessie n'est pas mise sous pression, et le maintien est levé lorsque l'au moins une vessie est mise sous pression.
- Le moyen de maintien temporaire peut comprendre une ou plusieurs pinces disposées à l'intérieur de la cloche, configurées pour maintenir la bande de matériau composite semi-fini dans la cloche en l'absence de mise sous pression de l'au moins une vessie.
- Le dispositif peut comprendre en outre un moyen de régulation thermique, configuré pour la chauffe du poinçon, et préférentiellement également pour le refroidissement du poinçon.

L'invention a également pour objet, sous un second aspect, un procédé de préformage d'un profilé composite creux comprenant un profil mâle et un profil femelle, mis en œuvre au moyen d'un dispositif tel que décrit ci-avant ; le procédé comprenant les étapes suivantes :
- une étape de mise en place d'une bande de matériau composite semi-fini dans le dispositif, entre le poinçon et l'au moins une vessie ;
- une étape de fermeture du dispositif, de sorte que la bande de matériau composite semi-fini soit appliquée au moins en partie contre le poinçon ;
- une étape de mise sous pression de l'au moins une vessie, de sorte que la bande de matériau composite semi-fini soit appliquée entièrement contre le poinçon, puis compactée contre le poinçon, sous l'action de la portion de paroi rigidifiée se déformant en partie sous l'effet de la pression ;
- une étape de consolidation de la bande de matériau composite semi-fini comprenant la chauffe puis le refroidissement de la bande de matériau composite semi-fini, pour ainsi préformer le profilé composite creux ;
- une étape de retrait de la préforme de profilé composite creux ainsi formé, comprenant la dépressurisation de l'au moins une vessie, l'ouverture du dispositif et le démoulage de la préforme de profilé composite creux.

Selon des modes de réalisation avantageux :
- L'étape de mise sous pression peut être une mise sous pression progressive de l'au moins une vessie.

Ceci permet une application progressive et sans introduction de contraintes de la bande de matériau composite semi-fini contre le poinçon.
- La mise sous pression progressive peut suivre une consigne de mise sous pression linéaire.
- La bande de matériau composite semi-fini peut être une bande de préimprégné comprenant un renfort formé par un empilement de tissus, préférentiellement en fibres de carbone.

Selon un troisième aspect, l'invention a également pour objet une préforme de profilé composite creux, préférentiellement de type raidisseur composite, obtenu par le procédé de préformage tel que décrit ci-avant, de sorte que la préforme de profilé composite creux présente une épaisseur de matériau composite sensiblement constante sur l'ensemble de son profil.

Un tel profilé, obtenu par le procédé précité, est dépourvu de contraintes mécaniques introduites au cours de sa fabrication, et présente des propriétés structurelles constantes sur l'intégralité de son profil.

Selon un quatrième aspect, l'invention a pour objet un procédé de fabrication d'une structure composite, la structure composite étant préférentiellement un panneau composite notamment de fuselage d'aéronef, le procédé comprenant les étapes suivantes :
- une étape d'obtention d'au moins une préforme de profilé composite creux au moyen d'un procédé de préformage tel que décrit ci-avant, le profilé composite creux étant préférentiellement un raidisseur composite ;
- une étape de drapage d'une pièce composite sur la préforme de profilé composite creux, la pièce composite étant préférentiellement une peau composite ;
- une étape de co-cuisson de l'au moins une préforme de profilé composite creux et de la pièce composite, pour obtenir la structure composite.

L'invention a également pour objet, sous un cinquième aspect, une structure composite, préférentiellement de type panneau composite notamment de fuselage d'aéronef, obtenue par le procédé de fabrication tel que décrit ci-avant.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
- la figure 1 est une vue schématique d'un panneau composite comprenant une peau composite et une pluralité de raidisseurs ;
- la figure 2 est une vue schématique du profil d'un raidisseur présentant un profil oméga ;
- la figure 3 est une vue de détail d'un angle mâle du raidisseur de la figure 2, lorsqu'il est obtenu au moyen d'un premier ou d'un deuxième procédé de préformage connu de l'art antérieur ;
- la figure 4 est une vue de détail d'un angle femelle du raidisseur de la figure 2, lorsqu'il est obtenu au moyen d'un troisième procédé de préformage connu de l'art antérieur ;

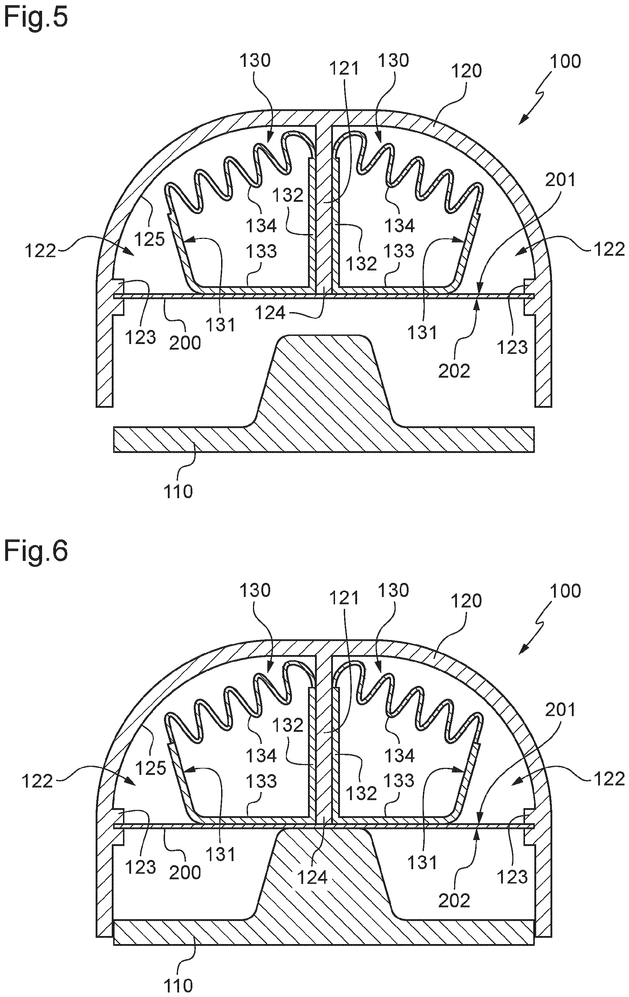

- la figure 5 représente schématiquement et selon une vue en coupe, un dispositif de préformage d'un raidisseur composite selon l'invention, suite à une première étape d'un procédé de préformage d'un raidisseur composite selon l'invention ;
- la figure 6 est une vue schématique du dispositif de préformage, similaire à la vue de la figure 5, suite à une deuxième étape du procédé de préformage ;

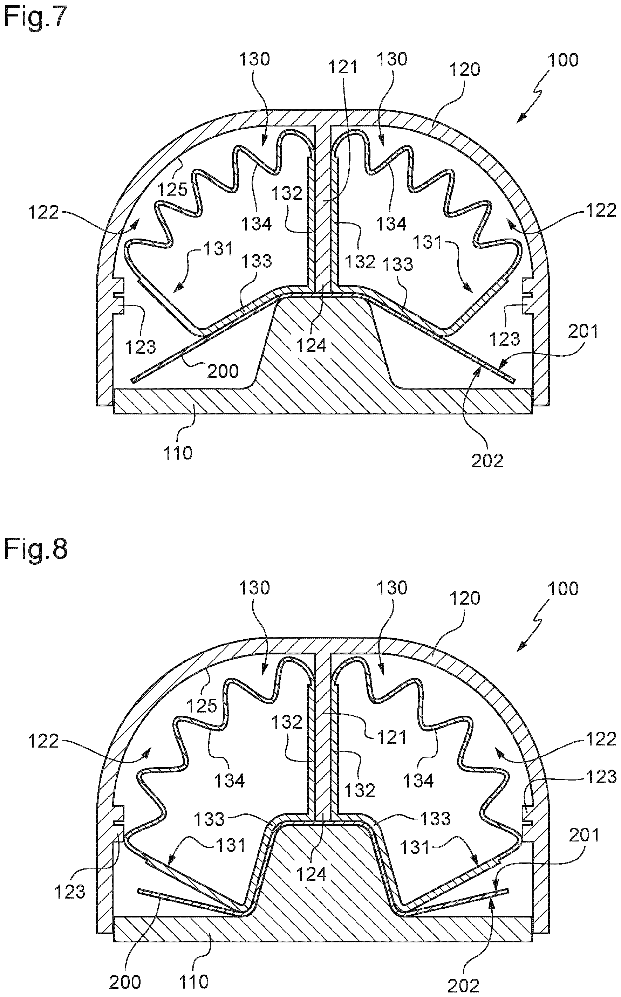

- la figure 7, la figure 8 et la figure 9 sont des vues schématiques du dispositif de préformage, similaires aux vues des figures 5 et 6, au cours d'une troisième étape du procédé de préformage ;

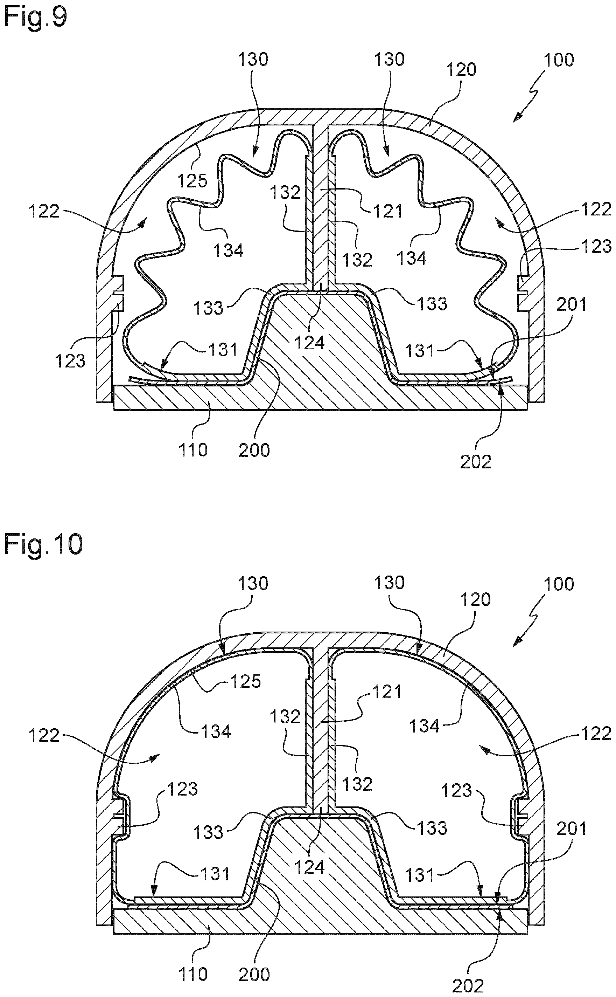

- la figure 10 est une vue schématique du dispositif de préformage, similaire aux vues des figures 5 à 9, suite à la troisième étape du procédé de préformage

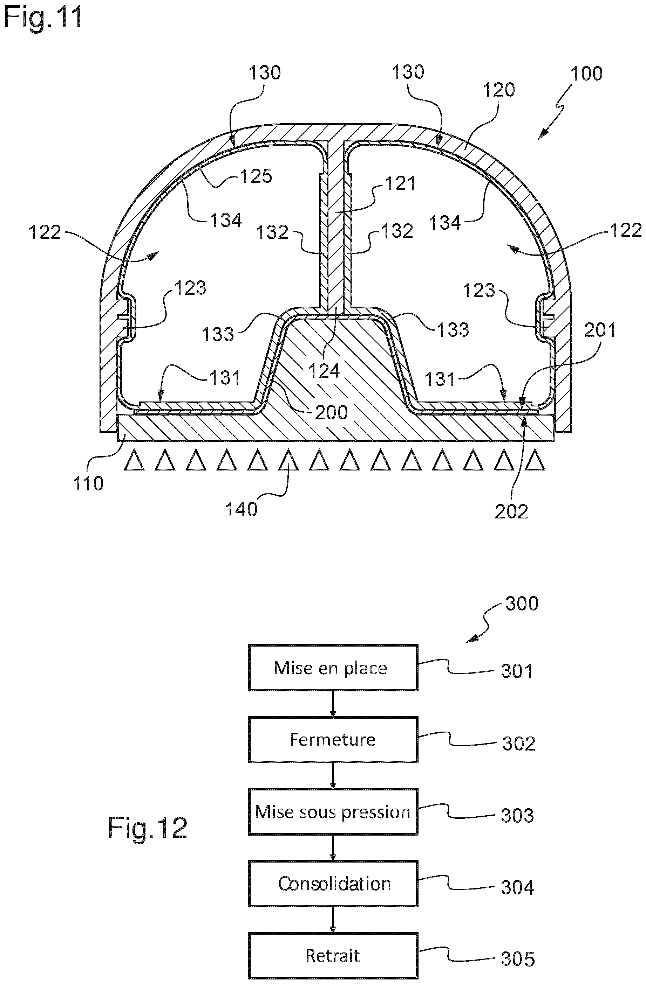

- la figure 11 est une vue schématique du dispositif de préformage, similaire aux vues des figures 4 à 10, au cours d'une cinquième étape du procédé de préformage ;
- la figure 12 est un schéma bloc-diagramme d'un procédé de préformage d'un raidisseur composite selon l'invention ;

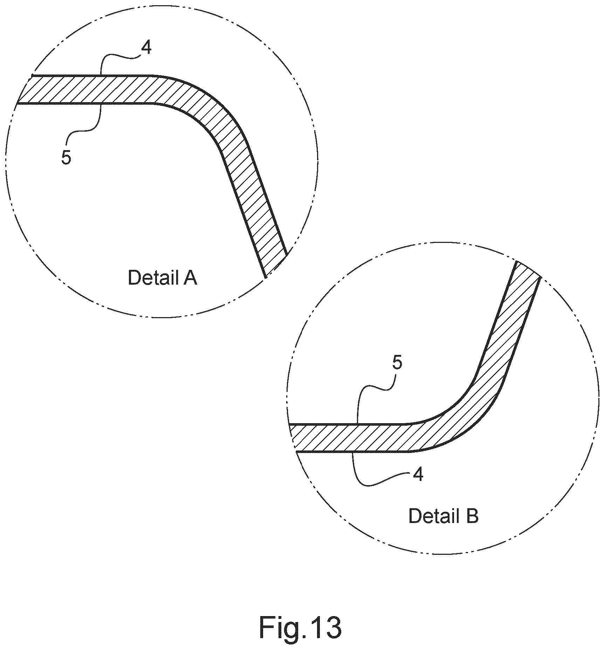

- la figure 13 est une vue de détail d'un angle mâle et d'un angle femelle du raidisseur de la figure 2, lorsqu'il est obtenu au moyen du procédé de préformage selon l'invention.

### DESCRIPTION DÉTAILLÉE DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas nécessairement à l'échelle.

Les figures 1 décrite précédemment illustre un tel panneau composite 1 générique, comprenant une peau composite 2 et une pluralité de raidisseurs 3, ici au nombre de trois ; et la figure 2 décrite précédemment illustre un raidisseur 3 générique présentant un profil oméga.

Les figures 3 et 4 décrites précédemment illustrent schématiquement respectivement un angle mâle et un angle femelle d'un raidisseur obtenu par les techniques connues de l'art antérieur.

L'invention décrite ci-après a pour objectif la réalisation, en particulier le préformage, d'un raidisseur 3 tel qu'illustré sur les figures 1 et 2 mais qui ne présente pas les défauts structurels des raidisseurs connus tel qu'illustré sur les figures 3 et 4.

On rappelle que l'invention n'est pas limitée aux raidisseurs et peut être généralisée à tout profilé composite creux générique présentant un profil mâle et un profil femelle.

On note que par la suite, les termes « profilé composite creux » et « préforme de profilé composite creux », et « raidisseur » et « préforme de raidisseur » peuvent être utilisés de façon interchangeable, la préforme d'un profilé désignant un profilé pouvant généralement être utilisé dans un procédé de fabrication subséquent, tandis que le terme profilé désigne un produit généralement fini. Les dispositifs et procédés décrits par la suite peuvent être adaptés en fonction du résultat souhaité, c'est-à-dire l'obtention d'une préforme de profilé ou d'un profilé fini.

Les figure 5 à 11 représentent schématiquement un dispositif 100 de préformage d'un raidisseur composite, à différentes étapes d'un procédé de préformage qui est décrit plus en détail par la suite.

Le dispositif 100 est configuré pour préformer un raidisseur en matériau composite à partir d'un matériau composite semi-fini, par exemple d'un préimprégné, également connu sous le nom de « prepreg » en terminologie anglaise, ou encore d'un tissu ou renfort dit « sec » par exemple comportant une poudre thermoplastique fusible à chaud, qui est infusé d'une matrice en résine après le préformage.

Par la suite, la description est faite en référence à un préimprégné comme matériau composite semi-fini, sans être limitée à ce type de matériau.

Le dispositif 100 permet de préformer un raidisseur longiforme par exemple à partir d'une bande de préimprégné.

Un tel raidisseur peut avoir une longueur de plusieurs mètres, jusqu'à environ 10 à 20 mètres de longueur, par exemple 15 mètres de longueur.

Tel que cela est connu, un préimprégné comprend une matrice imprégnant un renfort.

Par exemple, la matrice peut être une résine thermodurcissable ou un polymère thermoplastique.

Par exemple, le renfort peut être un tissage de fibres de carbones, et en particulier un empilement de tissus de fibres de carbone.

Le raidisseur composite formé au moyen du dispositif 100 peut être utilisé pour renforcer une structure, en particulier une structure elle-même composite, et en particulier de grande dimension.

Par exemple, le raidisseur composite obtenu peut être utilisé pour renforcer une structure comportant une peau composite, notamment pour former un panneau de fuselage d'aéronef.

Toute autre application, en particulier nécessitant le renforcement de structures, composites ou non, peut toutefois également être envisagée.

Le dispositif 100 comprend un poinçon 110 mâle, ou noyau mâle, et une cloche 120 configurée pour être placée en regard du poinçon 110. Par exemple, la cloche 120 peut être située au-dessus du poinçon 110, et être configurée pour être positionnée sur celui-ci.

En particulier, le poinçon 110 et la cloche 120 sont allongées en longueur, afin de permettre le préformage d'un raidisseur longiforme.

La cloche 120 comporte une paroi, qui est configurée de façon à ce que la paroi de la cloche 120 et le poinçon 110 définissent ensemble une chambre fermée lorsque la cloche 120 est placée en regard du poinçon 110.

En particulier, la cloche 120 peut être fermée au niveau de ses extrémités longitudinales.

La cloche 120 présente par exemple une section en forme de U, bien qu'une telle forme ne soit pas limitative.

Le poinçon 110 mâle présente un profil mâle, ou profil externe, correspondant au profil femelle du raidisseur à préformer.

Autrement dit, le poinçon 110 présente un profil convexe correspondant à la forme du profil femelle du raidisseur à préformer

Dans l'exemple illustré, le poinçon 110 présente un profil oméga, sans qu'un tel profil ne soit limitatif, des profils en Delta, L ou Z pouvant être utilisés.

Le dispositif 100 peut comprendre des moyens de régulation thermique 140 (voir la figure 11), configurés pour réguler thermiquement le poinçon 110 et permettant la chauffe, et préférentiellement également le refroidissement du préimprégné 200.

Comme alternative, les moyens de régulation thermique peuvent être externes au dispositif 100.

Le poinçon 110 et la cloche 120 peuvent tous deux être en matériau métallique.

De préférence, le poinçon 110 est en aluminium, pour permettre une régulation thermique efficace.

Le dispositif 100 comprend en outre au moins une vessie 130 déformable, disposée à l'intérieur de la cloche 120.

La vessie 130 est configurée pour être mise sous pression d'un gaz, par exemple de l'air, pour être gonflée et déformée sous l'effet de la pression.

A cet effet, le dispositif 100 peut comprendre un moyen de compression d'un gaz, tel qu'un compresseur (non représenté).

Comme alternative, le dispositif 100 peut comprendre un moyen de raccordement (non représenté) à une source de gaz sous pression externe au dispositif 100.

L'au moins une vessie 130 peut par exemple être en matériau élastomère.

De préférence, l'au moins une vessie 130 comporte une âme en matériau tissé, ce qui permet d'augmenter la durée de vie de la vessie et de garantir notamment durablement sa conformité géométrique.

L'au moins une vessie 130 s'étend de préférence sur l'intégralité de la longueur du dispositif 100, à l'intérieur de la cloche 120, c'est-à-dire que l'au moins une vessie est sensiblement allongée en longueur.

En particulier, la vessie 130 peut être obtenue par extrusion d'un profil constant de matière, par exemple élastomère, ce qui permet de former une vessie 130 de longueur importante.

Dans l'exemple illustré, le dispositif 100 comprend deux vessies 130, qui sont ici sensiblement identiques, et qui sont disposées de façon symétrique dans la cloche 120.

Dans cet exemple, la cloche 120 comprend une nervure centrale 121, formant une paroi délimitant deux cavités 122 de la cloche 120.

Chaque cavité 122 reçoit respectivement l'une des vessies 130.

Chacune des vessies 130 comporte une paroi 131, la paroi 131 pouvant comprendre une portion d'attache 132 par laquelle chaque vessie 130 est solidarisée à la nervure centrale 121, ou simplement conformée à la nervure centrale 121 pour permettre le bon positionnement de la vessie 130 dans la cavité 122.

En outre, la paroi 131 peut comprendre une portion de contact 133, configurée pour être mise au contact du préimprégné 200 au cours du préformage du raidisseur.

La paroi 131 peut également comprendre une portion d'expansion 134, qui est déformable et qui est configurée pour se développer lors de la mise sous pression de la vessie 130.

La cloche 120 comprend une surface intérieure 125, et la portion d'expansion 134 peut en particulier être configurée pour entrer en contact avec la surface intérieure 125 lorsque les vessies 130 sont gonflées.

La paroi 131 de chaque vessie 130 comprend une portion de paroi rigidifiée et une portion de paroi assouplie, c'est-à-dire que la paroi 131 comprend une portion de paroi plus rigide, autrement dit moins souple, et une autre portion de paroi moins rigide, autrement dit plus souple.

Par exemple, la portion de paroi rigidifiée comprend au moins la portion de contact 133, et peut également comprendre la portion d'attache 132. La portion de paroi assouplie peut comprendre la portion d'expansion 134.

La portion de paroi rigidifiée peut être formée par une portion de paroi épaissie, et la portion de paroi assouplie peut être formée par une portion de paroi amincie.

Par exemple, tel que cela est visible sur les figures 5 à 11, la portion d'attache 132 et/ou la portion de contact 133 sont épaissies, et la portion d'expansion 134 est amincie.

Selon une variante non illustrée, la portion de paroi rigidifiée peut être formée par une portion de paroi comprenant une âme rigide, et la portion de paroi assouplie peut être formée par une portion de paroi comprenant une âme moins rigide, ou aucune âme. Selon cette variante, la portion de paroi rigidifiée et la portion de paroi assouplie peuvent avoir une même épaisseur sensiblement constante, ou bien présenter des épaisseurs différentes tel que décrit précédemment.

Les portions de paroi épaissies présentent une rigidité augmentée, tandis que les portions de paroi amincies présentent une rigidité réduite.

La portion de paroi rigidifiée, comprenant la portion de contact 133, est préformée (par exemple par extrusion) de sorte à présenter un profil prédéfini dont la forme au repos correspond au moins en partie au profil mâle du profilé composite creux.

Par profil prédéfini, on entend un profil de la portion de paroi rigidifiée qui possède une forme prédéterminée, conférée à la paroi rigidifiée lors de sa fabrication par exemple.

Cette forme est celle que de la portion de paroi adopte lorsqu'elle est repos, c'est-à-dire lorsqu'elle n'est pas sollicitée mécaniquement (autrement qu'éventuellement par la pression atmosphérique et la force gravitationnelle).

La forme au repos de la portion de paroi rigidifiée, et en particulier de la portion de contact 133, est visible sur la figure 5 notamment, dans laquelle les vessies 130 ne sont pas gonflées et la pression n'agit pas sur la portion de paroi rigidifiée.

Comme cela est visible sur cette figure également, la portion de paroi rigidifiée peut avoir une forme sensiblement de L, correspondant également à la forme de la portion de contact 133 dans l'exemple illustré. La portion de paroi rigidifiée peut aussi avoir une forme sensiblement de U, comprenant la forme sensiblement en L, lorsque la portion d'attache 132 est également rigidifiée comme dans l'exemple illustré.

Dans l'exemple illustré, les deux vessies 130 disposées symétriquement comprennent chacun une portion de contact 133 en forme de L.

La portion d'expansion 134, qui est en particulier une portion de paroi assouplie et ici amincie, peut être configurée pour être repliée en accordéon lorsque la vessie 130 n'est pas mise sous pression, c'est-à-dire dépressurisée, et pour être dépliée lorsque la vessie 130 est mise sous pression.

En particulier, la portion d'expansion 134 est configurée pour être mise au contact de surface intérieure 125 de la cloche 120 lorsque la vessie 130 est mise sous pression.

Le dispositif 100 est configuré pour recevoir un préimprégné, et en particulier une bande de préimprégné 200, entre le poinçon 110 et la vessie 130.

La bande de préimprégné 200 se présente sous une forme sensiblement plane lors de sa mise en place dans le dispositif 100.

En particulier, la bande de préimprégné 200 peut être maintenue dans la cloche 120, qui comporte un moyen de maintien temporaire du préimprégné.

Par exemple, le moyen de maintien temporaire comprend une pluralité de pinces 123 formées sur la paroi de la cloche 120 à l'intérieur de celle-ci.

Selon une alternative, le moyen de maintien temporaire peut être formé par une butée inférieure, sur laquelle repose la bande de préimprégné 200 lors de sa mise en place.

En particulier, la nervure centrale 121 de la cloche présente une arête libre 124, et les pinces 123 sont formées à la hauteur de l'arête libre 124.

De cette manière, lorsque la bande de préimprégné 200 est mise en place dans le dispositif 100 et en particulier dans la cloche 120, l'arête libre 124 est au contact de la bande de préimprégné 200.

Dans une telle configuration, la bande de préimprégné 200 se trouve entre le poinçon 110 et les vessies 130, qui sont elles-mêmes disposées entre la bande de préimprégné 200 et la surface intérieure 125 de la cloche 120.

Autrement dit, une première face 201 de la bande de préimprégné 200 est orientée vers les vessies 130, tandis qu'une deuxième face 202 opposée à la première face 201 est orientée vers le poinçon 110.

On va maintenant décrire le fonctionnement du dispositif 100 de préformage d'un raidisseur composite, en référence aux figures 5 à 11.

En particulier, le dispositif 100 peut être configuré pour la mise en œuvre d'un procédé 300 de préformage d'un raidisseur composite, comprenant les étapes 301 à 305 décrites ci-après et illustré par le schéma bloc-diagramme de la figure 12.

La figure 5 illustre le dispositif 100 à la suite d'une étape 301 de mise en place de la bande de préimprégné 200 dans le dispositif 100.

Tel que cela est décrit ci-avant, la bande de préimprégné 200 est disposée entre le poinçon 110 et l'au moins une vessie 130, et ici les deux vessies 130.

Par exemple, la bande de préimprégné 200 peut être maintenue dans la cloche 120 au moyen de pinces 123 telles que décrites ci-avant.

Lors de la mise en place, les vessies 130 sont logées dans les cavités 122 et la portion de contact 133 de la paroi des vessies 130 est partiellement au contact de la bande de préimprégné 200.

En particulier, la portion de paroi rigidifiée et en particulier la portion de contact 133 de chaque vessie 130 se trouve partiellement en contact de la bande de préimprégné 200.

La portion d'expansion 134 est repliée en accordéon lors de cette étape.

La figure 6 illustre le dispositif 100 à la suite d'une étape 302 de fermeture du dispositif 100, au cours de laquelle le poinçon 110 et la cloche 120 sont rapprochés l'un relativement à l'autre.

En particulier, le poinçon 110 peut être rapproché en direction de la cloche 120

A l'issue de l'étape 302, la bande de préimprégné 200 est en partie en contact avec le poinçon 110.

En particulier, une portion centrale de la bande de préimprégné 200 est en prise entre le poinçon 110 et l'arête libre 124 de la cloche 120.

De cette manière, la bande de préimprégné 200 est maintenue en position contre le poinçon 110.

Il convient de préciser qu'à l'issue de cette étape, la bande de préimprégné 200 n'est pas encore déformée et demeure sensiblement plane.

La figure 7 illustre le dispositif 100 au cours d'une étape 303 de mise sous pression des vessies 130.

De préférence, la mise sous pression des vessies 130 est progressive au cours de cette étape.

Par exemple, la mise sous pression suit une consigne de montée en pression progressive telle qu'elle permet l'application progressive de la bande de préimprégné sur le poinçon 110.

L'étape 303 de mise sous pression peut comprendre une unique montée en pression, par exemple linéaire, ou par exemple plusieurs phases de montée en pression, par exemple linéaires mais de pentes différentes.

Par exemple, les vessies 130 peuvent être mises sous pression jusqu'à atteindre une première pression, puis être mises sous pression jusqu'à atteindre une deuxième pression, en particulier supérieure à la première pression.

Par exemple, la pression finale atteinte est d'environ 3 bars par rapport à l'atmosphère.

Tel que cela est illustré sur la figure 6, au cours de l'étape 303, la bande de préimprégné 200 est progressivement déformée ou « déroulée » contre le poinçon 110, commençant par les angles mâles du poinçon 110.

La bande de préimprégné 200 est désolidarisée des pinces 123 au cours de cette étape, qui cèdent sous l'effort exercé par la pression dans les vessies 130 et lèvent le maintien temporaire de la bande de préimprégné 200.

La figure 8 illustre le dispositif 100 au cours de l'étape 303 à un instant suivant celui de la figure 7.

Comme cela est visible sur la figure 8, la bande de préimprégné 200 a été déformée davantage encore et se conforme progressivement à la forme du poinçon 110 mâle.

La bande de préimprégné 200 est déformée sous l'action des vessies 130 qui se déforment sous l'effet de la pression, la portion de paroi rigidifiée et en particulier la portion de contact 133 se pliant autour de l'angle mâle du poinçon 110.

Comme cela est visible sur les figures 7 et 8, cours de cette étape, la portion de paroi rigidifiée conserve en partie sa forme au repos, en particulier au niveau de l'angle formé par son profil prédéfini en forme de L, garantissant ainsi la géométrie de la préforme dans l'angle concave, ou femelle, sur le poinçon.

La figure 9 illustre le dispositif 100 à la fin de l'étape 303 à un instant suivant celui de la figure 8, la bande de préimprégné 200 étant presque entièrement conformée à la forme du poinçon 110 mâle.

La portion de paroi rigidifiée, et en particulier la portion de contact 133, est entièrement pliée autour de l'angle mâle du poinçon 110. L'angle formé par le profil prédéfini en forme de L de la portion de contact 133 est entièrement appliqué dans l'angle femelle du poinçon 110. Autrement, dit la portion de paroi rigidifiée épouse progressivement la forme mâle du poinçon 110, et forme ce qui s'apparente à une matrice souple de forme femelle.

Au cours de l'étape 303, la portion d'expansion 134 se déplie de sa forme en accordéon à la mesure que la pression augmente dans les vessies 130, mais n'est pas nécessairement au contact de la surface intérieure 125 de la cloche 120.

La pression exercée sur la bande de préimprégné 200 est donc faible, en raison de l'absence de contre-pression par la surface intérieure 125 de la cloche 120, et il en résulte une déformation particulièrement progressive et sans contrainte de la bande de préimprégné 200.

L'utilisation de deux vessies 130 symétriques permet d'assurer que la portion de contact 133 épaissie formant matrice femelle entre en contact en correspondance exacte avec les angles du poinçon 110 mâle.

La figure 10 illustre le dispositif 100 suite à l'étape 303, à un instant suivant celui de la figure 9, la bande de préimprégné 200 étant entièrement conformée à la forme du poinçon 110 mâle.

La portion de contact 133 est pliée autour de l'angle mâle du poinçon 110 et son profil préformé correspond avec l'angle femelle du poinçon 110, la portion de contact 133 se trouvant entièrement en contact avec la bande de préimprégné 200.

La bande de préimprégné 200 est à la forme du profil oméga, prise entre le poinçon mâle et la portion de contact 133 formant une matrice femelle.

Autrement dit, à l'issue de l'étape 303, la portion de contact 133 de chacune des vessies 130 possède une forme sensiblement de S, l'une des branches de la forme prédéfinie de L au repos ayant été pliée au cours de l'étape 303.

En particulier, à l'issue de l'étape 303, la portion d'expansion 134 est dépliée et se trouve en contact avec la surface intérieure 125 de la cloche 120.

Cette première phase de mise sous pression permet la mise en forme progressive de la bande de préimprégné 200 sans introduire de contraintes dans le matériau.

En outre, au cours de l'étape 303, la mise sous pression peut être poursuivie à une pression supérieure, c'est-à-dire que les vessies 130 peuvent être mises sous pression à une deuxième pression supérieure à la première pression.

Cette deuxième phase de mise sous pression permet de compacter le préimprégné 200 qui est conformé à la forme du poinçon 110 à l'issue de la première phase de mise sous pression, décrite ci-avant.

On entend ici par compacter le fait de comprimer les fibres du renfort du matériau composite semi-fini.

Lors de cette deuxième phase de mise sous pression, en particulier la portion d'expansion 134 est en contact avec la surface intérieure 125 qui exerce une contre-pression sur les vessies 130, ce qui a pour effet que les vessies 130 appliquent une pression sur la bande de préimprégné 200 qui se compacte ainsi.

Le procédé 300 comprend en outre une étape 304 de consolidation du préimprégné, pour obtenir une préforme de raidisseur composite avec une rigidité suffisante. La préforme de raidisseur composite ainsi obtenu est apte pour la mise en œuvre d'un procédé de moulage subséquent, notamment pour poursuivre son processus de moulage sur la peau composite. On précise toutefois que la préforme de raidisseur peut également être cuit isolément afin d'obtenir un raidisseur composite seul, le cas échéant.

L'étape 304 de durcissement comprend notamment la chauffe, ou pré-cuisson, de la bande de préimprégné 200.

Par exemple, au cours de cette étape, le poinçon 110 est chauffé par les moyens de régulation thermique 140 du poinçon, tel que cela est illustré schématiquement sur la figure 11, par exemple jusqu'à atteindre une température de l'ordre de 80 °C.

Le dispositif 100 et la bande de préimprégné 200 sont ensuite refroidis, par exemple également par les moyens de régulation thermique 140.

A l'issue de l'étape 304, la bande de préimprégné 200 est consolidée et constitue une préforme de raidisseur composite, notamment apte à être moulée avec le panneau composite.

Le procédé 300 comprend également une étape 305 de retrait de la préforme de raidisseur composite ainsi formé.

L'étape 305 comprend notamment la dépressurisation, c'est-à-dire la mise à la pression atmosphérique, des vessies 130, l'ouverture du dispositif 100, c'est-à-dire la séparation du poinçon 110 et de la cloche 120 de façon à libérer l'accès à la préforme de raidisseur composite ainsi formé, ainsi que le démoulage de la préforme de raidisseur composite du poinçon 110

La figure 13 illustre schématiquement le détail A et le détail B d'un raidisseur tel que celui illustré sur la figure 2, obtenu au moyen du dispositif 100 et/ou par le procédé 300 de préformage.

Tel que cela est visible, l'épaisseur du profil du raidisseur au niveau de l'angle mâle et de l'angle femelle est sensiblement identique à l'épaisseur du profil en dehors de l'angle mâle et de l'angle femelle, autrement dit l'épaisseur du profil du raidisseur est sensiblement constante sur l'ensemble de son profil.

En particulier, les angles mâles ne présentent pas de sous-épaisseur du profil du raidisseur.

Il en va de même pour les angles femelles du raidisseur, qui ne présente pas de sur-épaisseur du profil du raidisseur.

Les caractéristiques d'un tel raidisseur peuvent être déterminées par exemple par la mesure de l'épaisseur du raidisseur le long de son profil.

Un raidisseur composite obtenu au moyen du dispositif 100 et/ou par le procédé 300 de préformage présente ainsi une intégrité structurelle améliorée par rapport aux raidisseurs obtenus par des procédés connus, et ne présente en particulier aucun défaut de contraintes dans les angles mâles et/ou femelles du profil du raidisseur.

Il en résulte un raidisseur composite amélioré, plus sûr et fiable, ce qui procure un avantage important en particulier dans des applications telles qu'au domaine aéronautique.

Un tel raidisseur se distingue de la technique connue, qui, comme cela est exposé plus en amont, ne permet pas d'obtenir de raidisseurs composites présentant une épaisseur de profil sensiblement constante notamment au niveau des angles du profil.

L'invention a également pour objet la fabrication d'une structure composite, par exemple un panneau composite notamment de fuselage d'aéronef, qui comprend les étapes suivantes :
- Une étape d'obtention d'au moins une préforme de profilé composite creux, par exemple un raidisseur, au moyen d'un procédé de préformage tel qu'il a été décrit ci-avant.
- Une étape de drapage d'une pièce composite, la pièce composite étant par exemple une peau composite.

Cette étape peut être une étape d'obtention d'une pièce composite connue de la technique et adaptée pour obtenir la structure composite souhaitée, par exemple par une étape de placement de fibres au moyen d'une tête de placement de fibre.
- Une étape de co-cuisson, c'est-à-dire de cuisson simultanée, du moins une préforme de profilé composite creux et de la pièce composite, pour obtenir la structure composite.

Par exemple, cette étape est une étape de moulage par co-cuisson du profilé composite creux et de la pièce composite, en particulier dans un autoclave et après avoir appliqué la pièce composite sur la préforme de profilé composite creux par une étape de placement de fibres, et dans laquelle un noyau de moulage est disposé à l'intérieur de la préforme de profilé composite creux.

On rappelle que l'invention ne se limite pas aux exemples décrits ou illustrés.

## Revendications

1. Dispositif (100) pour le préformage d'un profilé composite creux comprenant un profil mâle et un profil femelle, **caractérisé en ce que** le dispositif comprend : un poinçon (110) mâle correspondant à la forme du profil femelle du profilé composite creux, une cloche (120) configurée pour être disposée en regard du poinçon, et au moins une vessie (130) déformable disposée à l'intérieur de la cloche et configurée pour être mise sous pression ;
le dispositif étant configuré pour recevoir une bande de matériau composite semi-fini (200) entre le poinçon et l'au moins une vessie ;
l'au moins une vessie comprenant une paroi (131) avec une portion de paroi assouplie et une portion de paroi rigidifiée, la portion de paroi rigidifiée étant préformée de sorte à présenter un profil prédéfini dont la forme au repos correspond au moins en partie au profil mâle du profilé composite creux, la portion de paroi rigidifiée étant configurée pour entrer au moins partiellement en contact avec la bande de matériau composite semi-fini ;
le dispositif étant configuré pour préformer le profilé composite creux par déformation de l'au moins une vessie sous l'effet de la pression, de sorte à appliquer puis compacter la bande de matériau composite semi-fini contre le poinçon.

2. Dispositif (100) selon la revendication 1, dans lequel ladite portion de paroi rigidifiée est formée par une portion de paroi épaissie, et ladite portion de paroi assouplie est formée par une portion de paroi amincie.

3. Dispositif (100) selon l'une des revendication 1 ou 2, dans lequel au moins une partie de ladite portion de paroi assouplie présente un profil configuré pour être replié en accordéon en l'absence de mise sous pression de l'au moins une vessie et pour être déplié lorsque l'au moins une vessie est mise sous pression.

4. Dispositif (100) selon l'une quelconque des revendications 1 à 3, dans lequel l'au moins une vessie (130) est en matériau élastomère, préférentiellement renforcée au moins en partie avec une âme tissée.

5. Dispositif (100) selon l'une quelconque des revendications 1 à 4, dans lequel la cloche comprend deux cavités (122) internes, et le dispositif comprend deux vessies (130), chacune disposée dans une cavité interne distincte, de façon sensiblement symétrique.

6. Dispositif (100) selon la revendication 5, dans lequel la cloche (120) comprend une nervure centrale (121) séparant les deux cavités (122) internes de la cloche, la nervure centrale (121) étant configurée pour entrer en contact avec la bande de matériau composite semi-fini de sorte à mettre en contact le poinçon avec la bande de matériau composite semi-fini au niveau de ladite nervure centrale (121).

7. Dispositif (100) selon l'une des revendications 5 ou 6, dans lequel le profilé composite creux à préformer présente un profil dit oméga, et dans lequel la forme au repos du profil prédéfini des portions de paroi rigidifiée de chacune des vessies est sensiblement en forme de L.

8. Dispositif (100) selon l'une quelconque des revendications 1 à 7, comprenant un moyen de maintien temporaire de la bande de matériau composite semi-fini à l'intérieur de la cloche.

9. Dispositif (100) selon la revendication 8, dans lequel le moyen de maintien temporaire comprend une ou plusieurs pinces (123) disposées à l'intérieur de la cloche (120), configurées pour maintenir la bande de matériau composite semi-fini dans la cloche en l'absence de mise sous pression de l'au moins une vessie.

10. Dispositif (100) selon l'une quelconque des revendications 1 à 9, comprenant en outre un moyen de régulation thermique (140), configuré pour la chauffe du poinçon, et préférentiellement également pour le refroidissement du poinçon.

11. Procédé (300) de préformage d'un profilé composite creux comprenant un profil mâle et un profil femelle, mis en œuvre au moyen d'un dispositif (100) conforme à l'une quelconque des revendications 1 à 10 ;
le procédé comprenant les étapes suivantes :
- une étape (301) de mise en place d'une bande de matériau composite semi-fini (200) dans le dispositif, entre le poinçon (110) et l'au moins une vessie (130) ;
- une étape (302) de fermeture du dispositif, de sorte que la bande de matériau composite semi-fini soit appliquée au moins en partie contre le poinçon ;
- une étape (303) de mise sous pression de l'au moins une vessie, de sorte que la bande de matériau composite semi-fini soit appliquée entièrement contre le poinçon, puis compactée contre le poinçon, sous l'action de la portion de paroi rigidifiée se déformant en partie sous l'effet de la pression ;
- une étape (304) de consolidation de la bande de matériau composite semi-fini comprenant la chauffe puis le refroidissement de la bande de matériau composite semi-fini, pour ainsi préformer le profilé composite creux ;
- une étape (305) de retrait de la préforme de profilé composite creux ainsi formé, comprenant la dépressurisation de l'au moins une vessie, l'ouverture du dispositif et le démoulage de la préforme de profilé composite creux.

12. Procédé (300) selon la revendication 11, dans lequel l'étape de mise sous pression est une mise sous pression progressive de l'au moins une vessie.

13. Procédé (300) selon la revendication 12, dans lequel la mise sous pression progressive suit une consigne de mise sous pression linéaire.

14. Procédé (300) selon l'une quelconque des revendications 11 à 13, dans lequel la bande de matériau composite semi-fini est une bande de préimprégné comprenant un renfort formé par un empilement de tissus, préférentiellement en fibres de carbone.

15. Procédé de fabrication d'une structure composite, la structure composite étant préférentiellement un panneau composite notamment de fuselage d'aéronef, le procédé comprenant les étapes suivantes :
- une étape d'obtention d'au moins une préforme de profilé composite creux au moyen d'un procédé (300) de préformage conforme à l'une quelconque des revendications 11 à 14, le profilé composite creux étant préférentiellement un raidisseur composite ;
- une étape de drapage d'une pièce composite sur la préforme de profilé composite creux, la pièce composite étant préférentiellement une peau composite ;
- une étape de co-cuisson de l'au moins une préforme de profilé composite creux et de la pièce composite, pour obtenir la structure composite.
